# EUROPEAN PATENT APPLICATION

(11) **EP 4 199 638 A1**
(43) Date of publication of application: **21.06.2023**
(21) Application number: 21877878.5
(22) Date of filing: 16.09.2021
(51) Int. Cl.: H04W 76/18, H04W 76/19, H04W 76/15, H04W 24/10

(54) **METHOD AND APPARATUS FOR MANAGING LINK IN WIRELESS COMMUNICATION**

(30) Priority: 08.10.2020 KR 20200130500
(71) Applicant: Samsung Electronics Co., Ltd., Suwon-si, Gyeonggi-do 16677 (KR)
(72) Inventor: KIM, Sangbum, Suwon-si Gyeonggi-do 16677 (KR)
(74) Representative: Nederlandsch Octrooibureau
(86) International application number: PCT/KR2021/012695
(87) International publication number: WO 2022/075626

(57) **Abstract**

The present disclosure relates to a 5G or pre-5G communication system for supporting a higher data transmission rate than a 4G communication system such as LTE. A method for managing a link in a wireless communication may comprise the steps of collecting and storing RLF report content for an RLF report when DC-related MCG failure is detected; transmitting an MCG failure information message related to the MCG failure to a first base station; when a response message related to the MCG failure is not received within a predetermined time period after the MCG failure information message is transmitted, adding, to the stored RLF report content, an indicator indicating that fast MCG link recovery has not been successfully completed; and transmitting an RLF report including the stored RLF report content to a second base station during a wireless link re-establishment procedure after the MCG failure.

## Description

### [Technical Field]

Various embodiments of the disclosure may relate to a method and apparatus for reporting recovery failure of a fast master cell group (MCG) link supporting dual connectivity in wireless communication.

### [Background Art]

To meet the demand for wireless data traffic having increased since deployment of 4G (4^{th}-Generation) communication systems, efforts have been made to develop an improved 5G (5^{th}-Generation) or pre-5G communication system. Therefore, the 5G or pre-5G communication system is also called a `Beyond 4G Network' or a `Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, hybrid FSK and QAM Modulation (FQAM) and sliding window superposition coding (SWSC) as an advanced coding modulation (ACM), and filter bank multi carrier(FBMC), non-orthogonal multiple access (NOMA), and sparse code multiple access (SCMA) as an advanced access technology have been developed.

The development of the above-described mobile communication systems has enabled provision of various services, and wireless communication networks have become complex and diversified. Accordingly, there is a need for a technique of stably managing a radio communication link.

### [Detailed Description of the Invention]

### [Technical Problem]

The disclosure provides a method and apparatus for managing a radio link for a user equipment (UE) in a wireless communication system.

The disclosure provides a method and apparatus for reporting radio link failure (RLF) for a UE in a wireless communication system.

The disclosure provides a method and apparatus for controlling RLF reporting related to failure of a master cell group (MCG) associated with dual connectivity in a wireless communication system.

The disclosure provides a method and apparatus for including information indicating that a fast MCG link recovery operation has not been successfully completed in an RLF report in a wireless communication system.

The disclosure provides a method and apparatus for deleting RLF report content stored in a UE, when fast MCG link recovery is successful in a wireless communication system.

### [Technical Solution]

A method of managing a link by a user equipment (UE) in wireless communication according to an embodiment of the disclosure may include, upon detection of master cell group (MCG) failure related to dual connectivity, collecting and storing radio link failure (RLF) report content for RLF reporting, transmitting an MCG failure information message related to the MCG failure to a first base station (BS) related to the dual connectivity, based on a response message related to the MCG failure being not received within a specific time after the transmission of the MCG failure information message, adding an indicator indicating that fast MCG link recovery is not successfully completed to the stored RLF report content, and transmitting an RLF report including the stored RLF report content to a second BS related to a radio link re-establishment procedure during the radio link re-establishment procedure after the MCG failure.

An apparatus in a UE for performing link management in wireless communication according to an embodiment of the disclosure includes a communication unit and a controller. The controller may be configured to, upon detection of MCG failure related to dual connectivity, collect and store RLF report content for RLF reporting, transmit an MCG failure information message related to the MCG failure to a first BS related to the dual connectivity through the communication unit, based on a response message related to the MCG failure being not received within a specific time after the transmission of the MCG failure information message, add an indicator indicating that fast MCG link recovery is not successfully completed to the stored RLF report content, and transmit an RLF report including the stored RLF report content to a second BS related to a radio link re-establishment procedure through the communication unit during the radio link re-establishment procedure after the MCG failure.

A method of performing link management for a UE by a BS in wireless communication may include receiving, from the UE, an MCG failure information message related to MCG failure related to dual connectivity of the UE, performing a radio link re-establishment procedure with the UE after the reception of the MCG failure information message, and based on a notification indicator indicating that RLF report content for RLF reporting is stored being received from the UE during the radio link re-establishment procedure, receiving, from the UE, an RLF report including an indicator indicating that fast MCG link recovery is not successfully completed after the radio link re-establishment procedure.

An apparatus in a BS for performing link management for a UE in wireless communication includes a communication unit and a controller. The controller may be configured to receive an MCG failure information message related to MCG failure related to dual connectivity of the UE from the UE through the communication unit, perform a radio link re-establishment procedure with the UE after the reception of the MCG failure information message, and based on a notification indicator indicating that RLF report content for RLF reporting is stored being received from the UE during the radio link re-establishment procedure, receive an RLF report including an indicator indicating that fast MCG link recovery is not successfully completed from the UE through the communication unit after the radio link re-establishment procedure.

### [Brief Description of Drawings]

FIG. 1 is a diagram illustrating the structure of a next-generation mobile communication system.
FIG. 2 is a diagram illustrating radio link monitoring (RLM) according to an embodiment of the disclosure.
FIG. 3 is a diagram illustrating a radio link failure (RLF) problem according to an embodiment of the disclosure.
FIG. 4 is a diagram illustrating fast master cell group (MGC) link recovery according to an embodiment of the disclosure.
FIG. 5 is a diagram illustrating a signal flow for a procedure of configuring fast MCG link recovery according to an embodiment of the disclosure.
FIG. 6 is a diagram illustrating a signal flow for an operation of reporting fast MCG link recovery failure according to an embodiment of the disclosure.
FIG. 7 is a flowchart illustrating a user equipment (UE) operation of reporting fast MCG link recovery failure according to an embodiment of the disclosure.
FIG. 8 is a diagram illustrating a signal flow for an operation of, upon success of fast MCG link recovery, deleting RLF report content according to an embodiment of the disclosure.
FIG. 9 is a flowchart illustrating an operation of, upon success of fast MCG link recovery, deleting RLF report content according to an embodiment of the disclosure.
FIG. 10 is a block diagram illustrating the internal structure of a UE to which an embodiment of the disclosure is applied.
FIG. 11 is a block diagram illustrating the configuration of a next-generation Node B (gNB) according to an embodiment of the disclosure.

### [Mode for Carrying out the Invention]

Lest it should obscure the subject matter of the disclosure, a description of a related well-known function or configuration will be avoided in describing the disclosure. With the attached drawings, an embodiment of the disclosure will be described below.

Embodiments of the disclosure will be described in detail with reference to the attached drawings.

Lest it should obscure the subject matter of the disclosure, a description of a related well-known function or configuration will be avoided in describing the disclosure. Although the terms described later are defined in consideration of functions in the disclosure, the terms may be changed according to the intention of a user or an operator, or customs. Therefore, the definitions should be made by the meanings of each term lying within.

For the same reason, some components are exaggerated, omitted, or schematically illustrated in the attached drawings. Further, the drawn size of each component does not exactly reflect its real size. In each drawing, the same reference numerals are assigned to the same or corresponding components.

The advantages and features of the disclosure, and a method of achieving them will become apparent from reference to embodiments described below in detail in conjunction with the attached drawings. However, the disclosure may be implemented in various manners, not limited to the embodiments set forth herein. Rather, these embodiments are provided such that the disclosure is complete and thorough and its scope is fully conveyed to those skilled in the art, and the disclosure is only defined by the scope of the appended claims.

It will be understood that each block of the flowchart illustrations and combinations of the flowchart illustrations may be implemented by computer program instructions. These computer program instructions may be loaded on a processor of a general purpose computer, special purpose computer, or other programmable data processing equipment, such that the instructions, which are executed via the processor of the computer or other programmable data processing equipment, create means for implementing the functions specified in the flowchart block(s). These computer program instructions may also be stored in a computer-usable or computer-readable memory that may direct the computer or other programmable data processing equipment to function in a particular manner, such that the instructions stored in the computer-usable or computer-readable memory produce an article of manufacture including instruction means which implement the function specified in the flowchart block(s). The computer program instructions may also be loaded onto the computer or other programmable data processing equipment to cause a series of operations to be performed on the computer or other programmable data processing equipment to produce a computer implemented process such that the instructions which are executed on the computer or other programmable equipment provide operations for implementing the functions specified in the flowchart block(s).

Furthermore, each block may represent part of a module, a segment, or code including one or more executable instructions for performing specific logic function(s). Moreover, it should be noted that the functions of the blocks may be performed in a different order in several alternative modified implementations. For example, two successive blocks may be performed substantially at the same time, or may be performed in reverse order according to their functions.

The term "unit or part" as used herein means, but is not limited to, a software or hardware component, such as a field programmable gate array (FPGA) or application specific integrated circuit (ASIC). A "unit or part" may be configured to play certain roles. However, a "unit or part" is not limited to software or hardware. A "unit or part" may be configured to reside on an addressable storage medium and configured to be executed on one or more processors. Thus, A "unit or part" includes components, such as software components, object-oriented software components, class components and task components, processes, functions, attributes, procedures, subroutines, segments of program code, drivers, firmware, microcode, circuitry, data, databases, data structures, tables, arrays, and variables. The functionality provided in the components and "units" may be combined into fewer components and "units" or further separated into additional components and "units". In addition, the components and "units" may be implemented such that they are executed on one or more central processors (CPUs) in a device or a secure multimedia card. Further, a "unit or part" may include one or more processors and/or devices.

The operation principle of the disclosure will be described below in detail with reference to the attached drawings. Lest it should obscure the subject matter of the disclosure, a detailed description of a related well-known function or configuration will be avoided in describing the disclosure. Although the terms described later are defined in consideration of functions in the disclosure, the terms may be changed according to the intention of a user or an operator, or customs. Therefore, the definitions should be made by the meanings of each term lying within.

For convenience of description, some terms and names defined in the 3^{rd} generation partnership project long term evolution (3GPP LTE)-based communication standards (e.g., LTE, 5G, NR, or a similar system standard). However, the disclosure is not limited by the terms and names, and is equally applicable to systems conforming to other standards.

Terms identifying access nodes, terms signifying network entities, terms signifying messages, terms signifying interfaces between network entities, and terms signifying various types of identification information as used in the following description are given for convenience of description. Accordingly, the disclosure is not limited to the terms described below, and the terms may be replaced by other equivalent terms in technical meanings.

While embodiments of the disclosure are described mainly in the context of a radio access network, new RAN (NR) in the 5G mobile communication standard specified by a mobile communication standardization organization, the 3GPP, and a packet core (5G system, 5G core network, or next generation (NG) core)) as a core network, the subject matter of the disclosure is applicable to other communication systems having a similar technical background with slight modifications without departing from the scope of the disclosure, as judged by those skilled in the art.

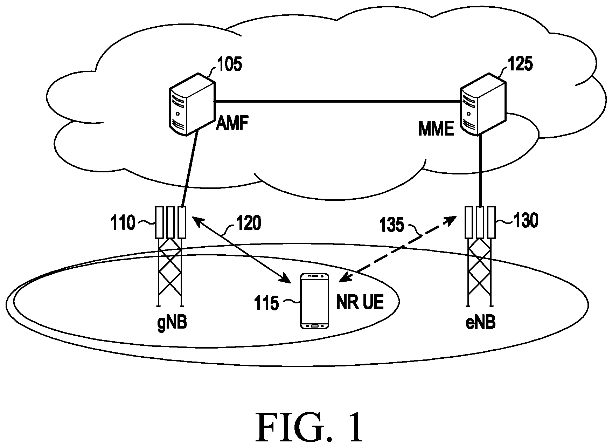

FIG. 1 is a diagram illustrating the structure of a next-generation mobile communication system.

Referring to FIG. 1, a radio access network (RAN) of the next-generation mobile communication system (e.g., new radio (NR)) may include a new radio Node B (hereinafter, referred to as gNB) 110 and an access and mobility management function (AMF) which is an NR wireless core network. A new radio user equipment (NR UE) (hereinafter, referred to as UE) 115 may be connected to an external network through the gNB 110 and the AMF 105.

The gNB 110 may correspond to an evolved Node B (eNB) of the LTE system. The gNB 110 may be connected to the NR UE 115 via a radio channel 120 and provide much better services than the eNB. Because user traffic is serviced on a shared channel in the next-generation mobile communication system, there is a need for a function of performing scheduling by collecting state information including at least one of buffer states, available transmission power, or channel states of UEs. The gNB 10 may be responsible for this function.

In general, a single gNB 110 may control multiple cells. To implement ultra-high-speed data transmission compared to LTE, a maximum bandwidth may be set to be equal to or greater than that of LTE, and beamforming may be additionally supported using orthogonal frequency division multiplexing (OFDM) as a radio access technology. The gNB 110 may apply an adaptive modulation and coding (AMC) scheme in which a modulation scheme and a channel coding rate are determined according to the channel state of a UE.

The AMF 105 may perform at least one function of mobility support, bearer configuration, or quality of service (QoS) configuration. The AMF 105 is a device responsible for various control functions as well as a mobility management function for the UE 115, and may be connected to multiple gNBs including the gNB 110. In addition, the next-generation mobile communication system may interwork with an existing system (e.g., the LTE system), and for the interworking, the AMF 105 is connected to a mobility management entity (MME) 125 through a network interface. The MME 125 is connected to an eNB 130, which is a legacy base station (BS) of the LTE system. The UE 115 supporting LTE-NR dual connectivity may transmit and receive data while being connected to the gNB 110 and maintaining a connection 135 to the eNB 130 at the same time.

As described above, dual connectivity through the eNB 130 which is a BS of the LTE system and the gNB 110 which is a BS of the NR system may be called E-UTRA new radio dual connectivity (EN-DC). A technology of simultaneously using a plurality of radio access technologies including EN-DC may be referred to as multi-radio access technology dual connectivity (MR-DC).

Bearers used as transmission paths of user traffic in a 5G non-standalone network environment (e.g., the network environment of FIG. 1) may be classified into a master cell group (MSG) bearer, a secondary cell group (SCG) bearer, and a split bearer. The UE 115 may include packet data convergence protocol (PDCP)/radio link control (RLC)/media access control (MAC) entities, and physical layer entities. The UE 115 may refer to an electronic device capable of communicating with the gNB 110 or the eNB 130. When it is said that the UE performs a specific operation in various embodiments of the disclosure, this may imply that at least one component included in the electronic device performs the specific operation.

An MCG may be, for example, the eNB 130 or the gNB 110 of FIG. 1, and an SCG may be, for example, the gNB 110 or the eNB 130 of FIG. 1. An MCG bearer may be associated with a path (or data) in which data may be transmitted and received using only resources or entities corresponding to a master node (MN) in dual connectivity. An SCG bearer may be associated with a path (or data) in which data may be transmitted and received using only resources or entities corresponding to a secondary node (SN) in dual connectivity. A split bearer may be associated with a path (or data) in which data may be transmitted and received using resources or entities corresponding to an MN and resources or entities corresponding to an SN. In the case of the split bearer, data from a core network may be split into the MN and the SN and integrated in a higher-layer entity (e.g., a PDCP entity) of the UE 115.

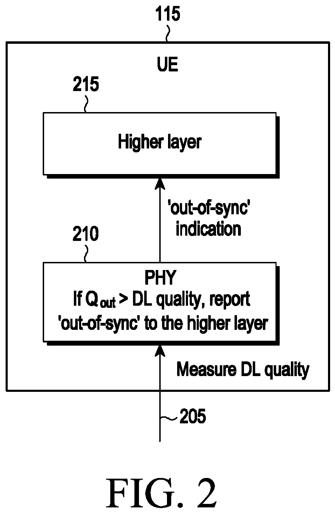

FIG. 2 is a diagram illustrating radio link monitoring (RLM) according to an embodiment of the disclosure.

Referring to FIG. 2, a UE (e.g., 115 in FIG. 1) includes a higher-layer entity 215 and a physical-layer entity 210. The higher-layer entity 215 may include PDCP, RLC, and MAC entities. The physical-layer entity 210 measures a downlink (DL) signal quality 205 in a cell-specific reference signal (CRS) received from a serving cell and determines whether the signal quality is lower than a specific threshold Qout. The threshold may be a signal quality value corresponding to a specific block error rate (BLER) measured in a physical downlink control channel (PDCCH) received from a BS.

In an embodiment, when the signal quality is lower than the threshold Qout, the physical-layer entity 210 may transmit an 'out-of-sync' indication to the higher-layer entity 215. In the LTE technology, this operation may be called RLM. When the indication is transmitted to the higher-layer entity 215 a specific number of or more times, the higher-layer entity 215 may start a specific timer. When a predetermined number of'in-sync' indications are not received from the physical-layer entity 210 until the timer expires or when a predetermined stop condition is not satisfied, the higher-layer entity 215 may declare radio link failure (RLF).

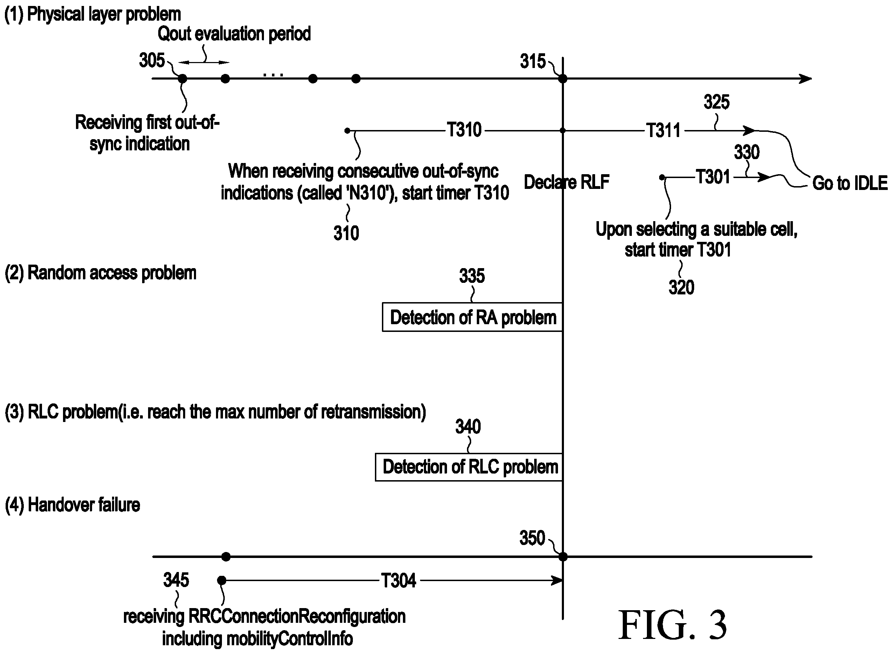

FIG. 3 is a diagram illustrating an RLF problem according to an embodiment of the disclosure.

Referring to (1) of FIG. 3, RLF may be declared according to the result of RLM. The physical layer (e.g., 210 in FIG. 2) of a UE (e.g., 115 in FIG. 1) may determine whether a DL signal quality measured in a CRS of a serving cell is lower than the specific threshold Qout in every specific period. When the signal quality is lower than the threshold Qout, the physical layer may transmit an 'out-of-sync' indication to a higher layer (e.g., 215 in FIG. 2). When a specific number N310 of 'out of sync' indications are transmitted to the higher layer after transmission of an initial indication to the higher layer (305), a predetermined timer T310 may be started (310).

In an embodiment, the physical layer may determine whether the DL signal quality measured in the CRS of the serving cell is higher than a specific threshold Qin. When the signal quality is higher than the threshold Qin, the physical layer may transmit an 'in-sync' indication to the higher layer. When the 'in-sync' indication is transmitted to the higher layer a specific number N310 of times, the ongoing T310 timer may be stopped. When the T310 timer is not stopped and expires, the higher layer may declare RLF (315).

After the RLF declaration, the UE may start a predetermined timer T311 and search for a new suitable cell. When the UE fails in detecting a new suitable cell until T311 expires, the UE may be switched to an idle mode (325). Upon detection of a new suitable cell before the timer expires, the UE may start the T301 timer and perform an RRC connection re-establishment procedure with the suitable cell (320).

When the UE fails in successfully completing the re-establishment procedure before expiration of the T301 timer, the UE may be switched to the idle mode (330). When the UE succeeds in the re-establishment procedure, the UE may continue a connected mode with the suitable cell. RLF may be declared by the RLM operation and also according to another condition.

Referring to (2) of FIG. 3, when the UE fails in a random access procedure, RLF may be declared (335).

Referring to (3) of FIG. 3, when the RLC layer of the UE reaches a maximum retransmission number without successfully transmitting a packet as a result of retransmissions based on an automatic repeat request (ARQ) function, RLF may be declared (340).

An exemplary description of the timers T301, T310, and T311 related to RLF may be given in <Table 1>.

**[Table 1]**

| **Timer** | **Start** | **Stop** | **At expiry** |
|---|---|---|---|
| T301 | Upon transmission of *RRCReestabilshmentReques t* | Upon reception of *RRCReestablishment* or *RRCSetup* message as well as when the selected cell becomes unsuitable | Go to RRC_IDLE |
| T310 | Upon detecting physical layer problems for the SpCell i.e. upon receiving N310 consecutive out-of-sync indications from lower layers. | Upon receiving N311 consecutive in-sync indications from lower layers for the SpCell, upon receiving RRCReconfiguration with *reconfigurationWithSync* for that cell group, upon reception of *MobilityFromNRCommand,* upon the reconfiguration of *rlf-TimersAndConstant,* upon initiating the connection reestablishment procedure, and upon *initiating the MCG failure information procedure.* | If the T310 is kept in MCG: If AS security is not activated: go to RRC_IDLE else: initiate the MCG failure information procedure or the connection re-establishment procedure or the procedure for detection of radio link failure if any DAPS bearer is configured. |
| | | | If the T310 is kept in SCG, Inform E-UTRAN/NR about the SCG radio link failure by initiating the SCG failure information procedure. |
| | | *Upon SCG release, if the T310 is kept in SCG.* | |
| T311 | Upon initiating the RRC connection re-establishment procedure | Upon selection of a suitable NR cell or a cell using another RAT. | Enter RRC_IDLE |

Referring to (4) of FIG. 3, the UE may declare RLF upon failure of handover. Upon receipt of an RRC message including a mobilityControlInfo information element (IE), for example, an RRCConnectionReconfiguration message (345), the UE may start a timer T304 (345). A setting value of T304 may be provided by mobilityControlinfo. When the UE fails in successfully completing random access to a target cell before the T304 timer expires, the UE may declare RLF (350).

Information collected when RLF occurs in the UE may be useful for optimizing a cell area. Therefore, when RLF occurs, this information may be stored in the UE. Then, when the UE is successfully switched to the connected mode, the UE may report the information to a BS. The report is called an RLF report, and the RLF report may include, for example, at least one of the followings as RLF report content collected when RLF occurs.
- plmn-IdentityList: A list of public land mobile network (PLMN) identifiers (PLMN IDs) to which a cell belongs
- measResultLastServCell: A signal quality measured from the last serving cell of the UE
- measResultNeighCells: Signal qualities measured from neighbor cells of the UE
- locationInfo: Location information about the UE
- failedPCellId: A physical cell ID of a primary cell (PCell) in which RLF has been detected
- previousPCellId: A global cell ID of a primary cell in which a last RRC reconfiguration message has been received
- timeConnFailure: An elapsed time after the last RRC reconfiguration message has been received
- C-RNTI used in the source PCell: A cell radio network temporary identifier (C-RNTI) used in a source primary cell
- connectionFailureType: Indicates whether connection failure is caused by RLF or handover failure.

In an embodiment, the UE may perform a cell selection operation and an RRC reestablishment operation after the RLF occurrence. Because collected information may also be useful for optimizing the cell area, the information may also be reported to the BS.

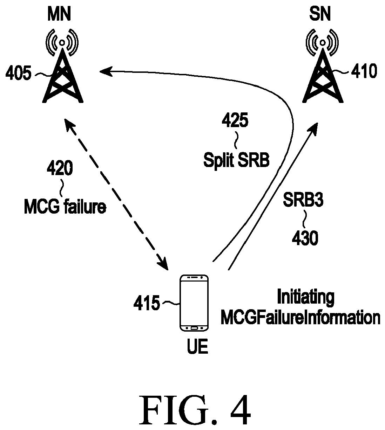

FIG. 4 is a diagram illustrating a fast MCG link recovery operation according to an embodiment of the disclosure.

Referring to FIG. 4, a UE 415 configured with dual connectivity may be connected to both BSs including an MN 405 and an SN 410 and transmit and receive data and signals to and from them. When a problem occurs to the connection to the SN 410, the UE 415 may report to the MN 405 that there is a problem with the connection to the SN 410. The MN 405 may reconfigure an SCG according to the report.

On the contrary, when a problem occurs to the connection to the MN 405, the UE 415 may declare RLF and perform a RRC connection re-establishment procedure. It takes much time to recover the connection state of the UE 415 through the re-establishment procedure and most of settings should be applied again.

In the REL-16 NR standard, a fast MCG link recovery technology was introduced to overcome the above disadvantages. In the fast MCG link recovery technology, when the UE 415 with dual connectivity has a problem with the connection to the MN 405, the UE 415 may declare RLF and then transmit an RRC message notifying MCG failure 420, for example, an MCGFailureInformation message to the SN 410.

In an embodiment, when a split signaling radio bearer (SRB) 425 is configured with the SN 410, the UE 415 may transmit the RRC message to the MN 405 through the SN 410 via the split SRB 425. Otherwise, when SRB3 430 is configured with the SN 410, the UE 415 may transmit the RRC message to the MN 405 via the SN 410 through SRB3 430. SRB3 refers to a bearer for a specific RRC message using a logical channel, dedicated control channel (DCCH), when the UE is configured with EN-DC or NR-DC.

When SRB3 430 is used, a ULInformationTransferMRDC message containing the MCGFailureInformation may be transmitted to the SN 410. Along with the transmission of the MCGFailureInformation message, a predetermined timer T316 is started in the UE 415, and the re-establishment procedure is deferred until the T316 timer expires. Upon receipt of an RRCRelease message or an RRCReconfiguration message that configures handover from the SN before expiration of the T316 timer, the UE stops the T316 timer.

For example, a description is given of an operation of the timers T304 and T316 in <Table 2> below.

**[Table 2]**

| **Timer** | **Start** | **Stop** | **At expiry** |
|---|---|---|---|
| T304 | Upon reception of *RRCReconfiguration* message including *reconfigurationWithSync* or upon conditional reconfiguration execution i.e. when applying a stored *RRCReconfiguration* message including *reconfiguration WithSync.* | Upon successful completion of random access on the corresponding SpCell | For T304 of MCG, in case of the handover from NR or intra-NR handover, initiate the RRC re-establishment procedure; In case of handover to NR, perform the actions defined in the specifications applicable for the source RAT. If any DAPS bearer is configured and if there is no RLF in source PCell, initiate the failure information procedure. |
| | | For T304 of SCG, upon SCG release | |
| | | | For T304 of SCG, inform network about the reconfiguration with sync failure by initiating the SCG failure information procedure. |
| T316 | Upon transmission of the *MCGFailurelnformation* message | Upon receiving *RRCRelease, RRCReconfiguration* with *reconfigurationwithSync* for the PCell, *MobilityFromNRCommand,* or upon initiating the reestablishment procedure | Perform the actions as specified for T316 expiry. |

Specifically, the T316 timer starts when the MCGFailureInformation message is transmitted, and stops when at least one of the following conditions is satisfied.
- When the RRCRelease message for releasing an RRC connection is received.
- When an RRCReconfiguration message including a reconfigurationWithSync IE, which instructs execution of reconfiguration including synchronization of a PCell is received.
- When a MobilityFromNRCommand message used to command an inter-RAT handover is received.
- When the re-establishment procedure is initiated.

Upon receipt of the MCGFailureInformation message via SRB3 430, the SN 410 may transmit a DLInformationTransferMRDC message containing an RRCRelease message or an RRCReconfiguration message that configures handover to the UE 415. If either the split SRB 425 or SRB3 430 is not configured with the SN 410, the UE 415 may not perform the fast MCG link recovery operation.

A case in which the UE 415 fails in receiving the RRCRelease message or the RRCReconfiguration message that configures handover until expiration of the T316 despite transmission of the MCGFailureInformation message from the UE 415 is referred to as fast MCG link recovery failure. Upon occurrence of the fast MCG link recovery failure, the UE initiates the RRC connection re-establishment procedure.

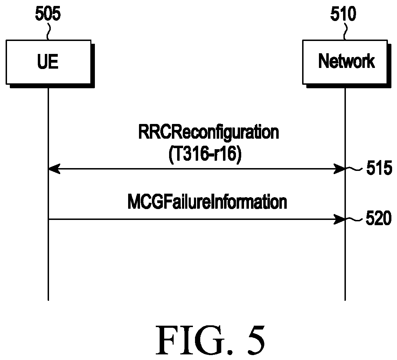

FIG. 5 is a flowchart illustrating a procedure of configuring a fast MCG link recovery operation according to an embodiment of the disclosure.

Referring to FIG. 5, a UE 505 (e.g., 115 in FIG. 1 or 415 in FIG. 4) receives an RRCReconfiguration message including T316 configuration information from a BS 510 as a network node (515). The BS 510 may be, for example, an MN or an SN. Upon occurrence of RLF in a connection to the MN, the UE transmits an MCGFailureInformation message to the SN BS 510 (or another BS) (520). For example, the MCGFailureInformation message may include at least one of the following pieces of information in MCG failure report information, FailureReportMCG.
- failureType-r16 {t310-Expiry, randomAccessProblem, rlc-MaxNumRetx, t312-Expiry-r16, lbt-Failure-r16, beamFailureRecoveryFailure-r16, bh-RLF-r16, spare1 }
- measResultFreqList-r16
- measResultFreqListEUTRA-r16
- measResultSCG-r16
- measResultSCG-EUTRA-r16
- measResultFreqListUTRA-FDD-r16
failureType is used to indicate at least one of timer expiry, a random access problem, a maximum retransmission number of an RLC layer, listen-before-talk (LBT) failure, failure of beam failure recovery, or backhaul (BH) RLF as a cause of MCG failure. measResultFreqList, measResultFreqListEUTRA, and measResultFreqListUTRA-FDD include a measurement result value of an NR frequency, an E-UTRA frequency, or a UTRA frequency set in measurement configuration information, measConfig. measResultSCG and measResultSCG-EUTRA include a measurement result value of an NR frequency or an E-UTRA frequency set in SCG measurement configuration information, measConfig.

When MCG failure occurs and thus RLF is declared, the UE stores valid information at a corresponding time. That is, RLF report content including information to be included in an RLF report is stored in the UE. After the UE is switched to the connected mode, the UE may transmit the RLF report including the RLF report content to a BS. The fast MCG link recovery operation is performed after the RLF occurs. In the following embodiments, as fast MCG link recovery triggered after the RLF is successful or failed, methods of processing an RLF report are proposed. For example, upon receipt of an RRCRelease message or an RRCReconfiguration message that configures handover from the BS within a specific time after transmitting MCGFailureInformation, the UE may determine that the fast MCG link recovery is successful. Otherwise, the UE may consider that the fast MCG link recovery is failed.

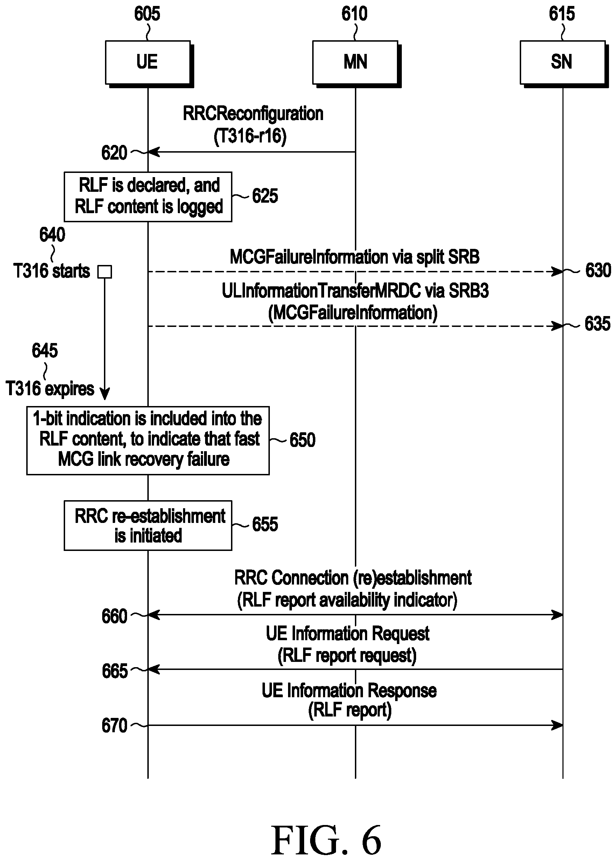

FIG. 6 is a flowchart illustrating an operation of reporting fast MCG link recovery failure according to an embodiment of the disclosure.

Referring to FIG. 6, an MN BS 610 may include configuration information for fast MCG link recovery in a predetermined RRC message, for example, an RRCReconfiguration message transmitted to a UE 605 configured with dual connectivity (620). The configuration information may include a setting value for a T316 timer. In an embodiment, the configuration information may include an indicator instructing whether to store information related to fast MCG link recovery failure as content of an RLF report, when the fast MCG link recovery failure occurs.

The UE 605 may declare RLF according to a predetermined condition, and set and store information for RLF reporting (e.g., including RLF report content or RLF report variables) (625). The UE 605 may transmit an MCGFailureInformation message to an SN BS 615 via a split SRB or SRB3 (630 and 635). The SNBS 615, which has received the MCGFailureInformation message, may transmit the MCGFailureInformation message to the MN BS 610.

In an embodiment, the UE 605 may start the T316 timer while transmitting the MCGFailureInformation message (640). The UE 605 may not receive an RRCRelease message or an RRCReconfiguration message that configures handover until the T316 timer expires (645). For example, the MCGFailureInformation message may not reach the SN BS 615 or the UE 605 may not receive the RRCRelease message or the RRCReconfiguration message that configures handover from the SN BS 615, due to a poor radio link with the SN BS 615. Alternatively, the MCGFailureInformation message may not be transmitted to the MN BS 610, or the MN BS 610 may not make any decision.

In a conventional RLF report, the UE 605 may only detect that the T316 timer has expired without identifying the fast MCG link recovery failure. To optimize the fast MCG link recovery operation, the UE 605, a network node, and/or a mobile communication operator needs to recognize failure or success of the fast MCG link recovery.

In an embodiment of the disclosure, when the T316 timer expires (645), the UE 605 may add an indicator (e.g., a 1-bit indicator) indicating that the fast MCG link recovery operation has not been successfully completed (or the T316 timer has expired) to the RLF report content (645). In an embodiment, the UE 605 may further include all or some information (e.g., failureType information) included in the MCGFailureInformation message in the RLF report content. In an embodiment, the UE 605 may additionally include, in the RLF report content, an indicator indicating that a radio bearer used to transmit the MCGFailureInformation message is a split SRB or SRB3.

In an embodiment, indication information indicating whether the UE has failed to transmit the MCGFailureInformation message to the SN BS until the T316 timer expires, or the UE has failed to receive the RRCRelease message from the SN BS until the T316 timer expires may be additionally included in the RLF report. In an embodiment, signal strength measurement information about a serving cell and neighbor cells when the T316 timer expires may be additionally included in the RLF report.

When identifying that the T316 timer has expired and the fast MCG link recovery has failed, the UE 605 may initiate an RRC connection re-establishment operation (655).

To switch to the connected mode with a BS (e.g., the SN BS 615 or another BS) (hereinafter, described as the SN BS 615) later, the UE 605 may then perform the RRC (re)establishment operation (660). Herein, the UE 605 may include an RLF report availability indicator indicating that the RLF report content for RLF reporting is stored in an RRCSetupComplete or RRCReetablishmentComplete message for RRC (re)establishment and transmit the RRCSetupComplete or RRCReetablishmentComplete message to the SN BS 615.

The SN BS 615 may request the RLF report by transmitting a UEInformationRequest message to the UE 605 in response to the RLF report availability indicator (665). Upon detection of the request, the UE 605 may transmit the RLF report including the stored RLF report content to the SN BS 615, using a UEInformationResponse message (670).

As described above, the RLF report may include an indicator indicating that the fast MCG link recovery operation has not been successfully completed (or the T316 timer has expired). In an embodiment, the SN BS 615 may transmit the RLF report to the MN BS 610 or directly to an upper network node. The MN BS 610 (or the SN BS 615) may improve the fast MCG link recovery operation for the UE 605 based on the information of the RLF report. For example, the MN BS 610 (or the SN BS 615) may generate configuration information related to the fast MCG link recovery operation for the UE 605 based on the indicator and other information in the RLF report, and provide the configuration information to the UE.

The upper network node may perform network optimization based on the indicator and other information included in the RLF report or support settings related to the fast MCG link recovery operation. While some implementation examples that may be performed based on the indicator indicating that the fast MCG link recovery operation of the UE has failed in the RLF report transmitted by the UE have been described, the embodiments of the disclosure are not limited thereto, and it is apparent that various implementations that are not disclosed are available and the resulting effects may be achieved.

The MCGFailureInformation message may be transmitted via a split SRB or SRB3, and the RLF report may be transmitted via SRB1. As described above, when the UE 605 has failed to receive a response message to the MCGFailureInformation message (e.g., RRCRelease or RRCReconfiguration) for a predetermined time (e.g., T316) after transmitting the MCGFailureInformation message (635), the UE 605 may transmit an RLF report including a related indicator, for example, an indicator indicating that the fast MCG link recovery operation has not been successfully completed (or the T316 timer has expired) and/or an indicator indicating whether the MCGFailureInformation message was transmitted via a split SRB or SRB3 to a BS with which RRC re-establishment is to be performed.

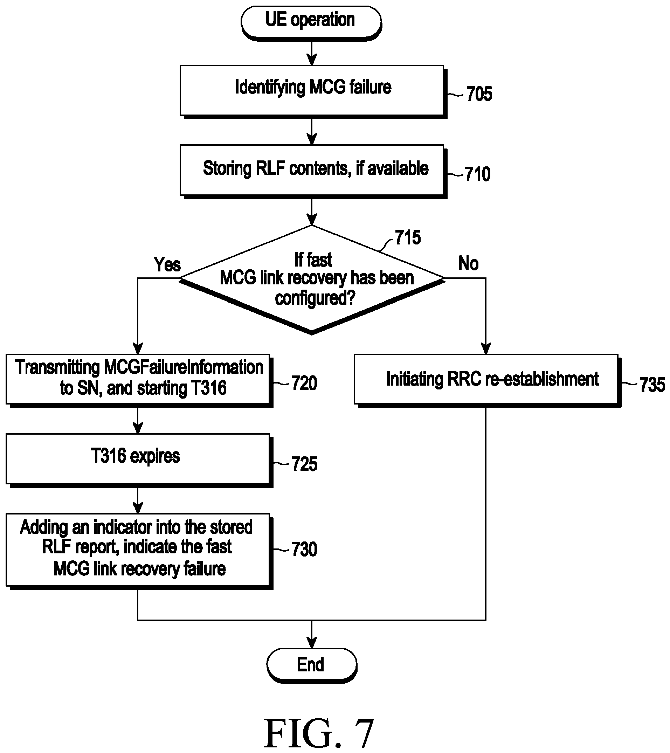

FIG. 7 is a flowchart illustrating a UE operation of reporting fast MCG link recovery failure according to an embodiment of the disclosure.

Referring to FIG. 7, the UE may detect and recognize MCG failure in step 705.

In step 710, the UE may collect valid information in relation to the MCG failure and store the information in RLF report content.

In step 715, the UE may determine whether a split SRB or SRB3 has been configured between the UE and an SN BS, and fast MCG link recovery has also been configured.

In step 720, when the split SRB or SRB3 has been configured between the UE and the SN BS, and fast MCG link recovery has been configured, the UE may transmit a MCGFailureInformation message to the SN BS and start a T316 timer.

In step 725, the UE may recognize that the T316 timer has expired without receiving a response to the MCGFailureInformation message.

In step 730, the UE may add an indicator indicating that the fast MCG link recovery has failed to the RLF content. Subsequently, the UE may transmit an RLF report including the RLF report content to the SN BS, while performing an RRC re-establishment according to a predetermined procedure.

In step 735, when the split SRB or SRB3 has not been configured or fast MCG link recovery has not been configured, the UE may perform an RRC re-reestablishment operation.

The MCGFailureInformation message may be used to immediately indicate MCG failure to an MN BS. In an embodiment, failureType and cell measurement results may also be included in the MCGFailureInformation message. When the MCGFailureInformation message is successfully transmitted to the MN BS, the MN BS may recognize the occurrence of the RLF, thereby reducing the usefulness of the RLF report transmitted later by the UE. On the other hand, the RLF report may be reported to the MN BS in a UE information exchange process, and the RLF report with the decreased usefulness may only cause unnecessary signaling overhead.

Therefore, methods of deleting the stored RLF report content, when it is determined that the fast MCG link recovery is successfully completed are proposed in the following embodiments.

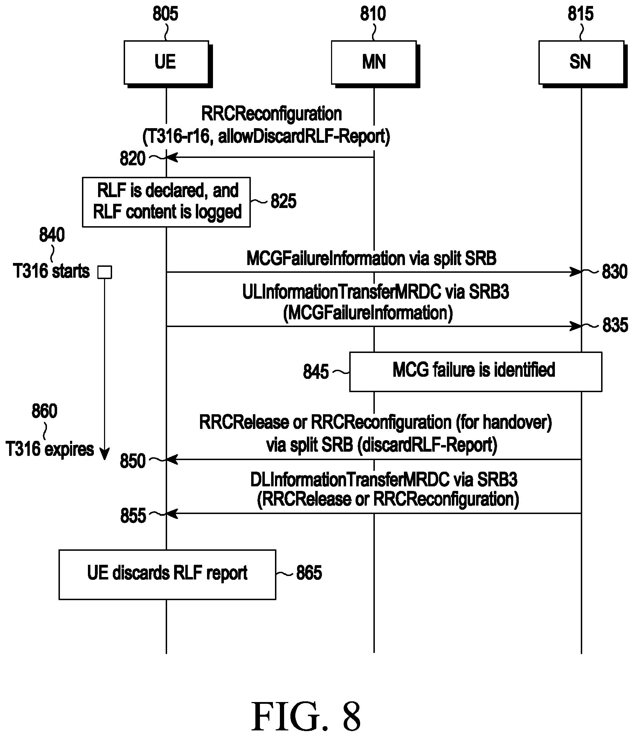

FIG. 8 is a diagram illustrating a signal flow for an operation of deleting RLF report content, upon success of fast MCG link recovery according to an embodiment of the disclosure.

In a first method according to an embodiment, a UE 805 may be configured or predesigned by the network to delete RLF report content stored in the UE 805 when a predetermined condition is satisfied. Referring to FIG. 8, an MN BS 810 may include a predetermined indicator (allowdiscardRLF-report in FIG. 8) in an RRCReconfiguration message which is transmitted to the UE 805 to configure fast MCG link recovery (820). The indicator may be set to a value indicating whether to delete the RLF report content stored in the UE 805, when the predetermined condition is satisfied. In an embodiment, the UE 805 may be configured to delete the stored RLF report content, when the condition is satisfied without a setting of the network.

The condition for deleting the RLF report content stored in the UE 805 may include at least one of the followings below.
- When the T316 Timer is stopped (860)
- When an RRCRelease or an RRCReconfiguration message including handover configuration information is received from the network (850 and 855)
- When transmission of the MCGFailureInformation message is successfully completed (i.e., an ACK is received for the transmission of the message) (830 and 835)

The UE 805 configured with fast MCG link recovery by configuration information in the RRCReconfiguration message may declare RLF and collect RLF report content (825). At the same time, the UE 805 may start a T316 timer according to a setting value of the T316 timer included in the RRCReconfiguration message, and transmit an MCGFailureInformation message to the SN BS 815 via a split SRB or SRB3 (830 or 835). The SN BS 815 may identify that MCG failure has occurred according to the MCGFailureInformation message (845).

When the UE 805 fails to receive, for example, an RRCRelease message or an RRCReconfiguration message that configures handover from the SN BS 815 in response to the MCGFailureInformation message until the T316 timer expires, the UE 805 may delete the stored RLF report content according to a predetermined condition (865).

Before the expiration of the T316 timer, the RRCRelease message or the RRCReconfiguration message that configures handover may be received from the SN BS in response to the MCGFailureInformation message (850) or a DLInformationTransferMRDC including the RRCRelease message or the RRCReconfiguration message that configures handover may be received from the SN BS in response to the MCGFailureInformation message (850).

The RRCRelease message or the RRCReconfiguration message may include an indicator DiscardRLF-Report instructing whether to delete the RLF report content stored in the UE 805 when the predetermined condition is satisfied. The UE 805 may then delete the RLF report content stored in the UE 805 in response to a pre-setting or detection of the indicator DiscardRLF-Report (865).

Individually from or additionally to the expiration of the T316 timer or the indicator DiscardRLF-Report, the UE 805 may transmit the MCGFailureInformation message (830 or 835). Upon receipt of an ACK for the message, the UE 805 may delete the RLF report content stored in the UE 805 (865).

In a second method according to an embodiment, the UE 805 may receive an explicit signaling instructing deletion of pre-stored RLF report content from a network (i.e., 810 or 815 in FIG. 8) and delete the stored RLF report content. Referring to the example of FIG. 8, when the UE 805 transmits an MCGFailureInformation message, the network (e.g., 815 in FIG. 8) receiving the message may transmit an RRCRelease message or an RRCReconfiguration message that configures handover to the UE 805 (850). An indicator (e.g., discardRLF-Report) instructing deletion of the RLF report content stored by the UE 805 may be included in the RRCRelease message or the RRCReconfiguration message. The UE 805 may delete the RLF report content in response to detection of the indicator (865).

According to the first method or the second method, the UE 805 deletes the stored RLF report content when the fast MCG link recovery is successfully completed. Therefore, even though the UE 805 is later switched to the connected mode with a BS (810 or 815 of FIG. 8 or another BS), the UE 805 does not need to transmit to the BS an availability indicator indicating that there is pre-stored RLF report content. Accordingly, an operation of transmitting an RLF report that is less useful may not take place.

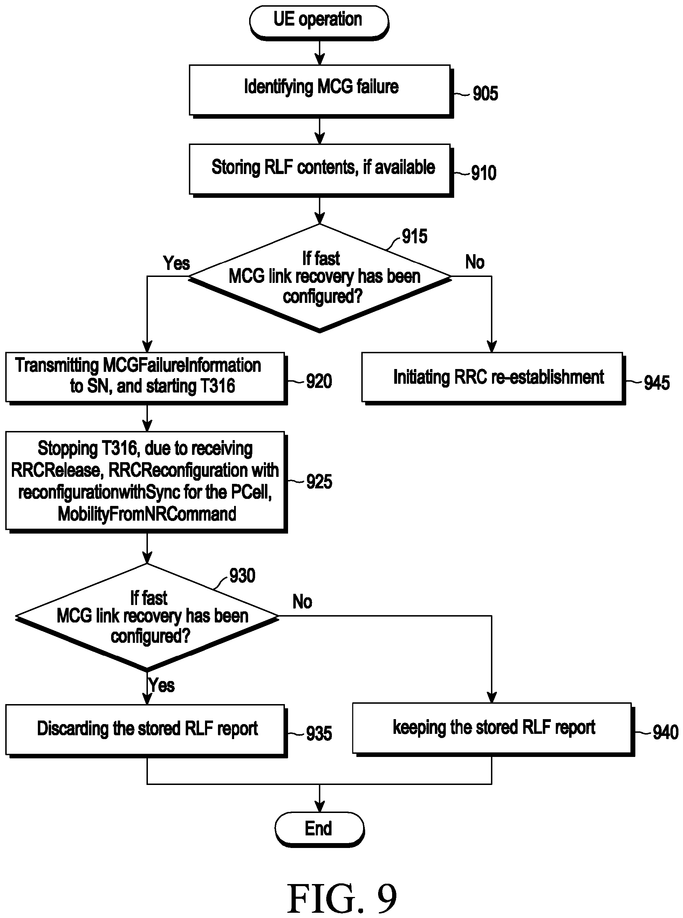

FIG. 9 is a flowchart illustrating an operation of deleting RLF report content, when fast MCG link recovery is successful according to an embodiment of the disclosure.

Referring to FIG. 9, a UE may detect and recognize MCG failure in step 905.

In step 910, the UE may collect valid information in relation to the MCG failure and store the information in RLF report content.

In step 915, the UE may determine whether a split SRB or SRB3 has been configured between the UE and an SN BS, and fast MCG link recovery has been configured.

In step 920, when the split SRB or SRB3 has been configured between the UE and the SN BS, and fast MCG link recovery has been configured, the UE may transmit an MCGFailureInformation message to the SN BS and start a T316 timer.

In step 925, the UE may receive an RRCRelease message or an RRCReconfiguration message that configures handover and stop the T316 timer, after the transmission of the MCGFailureInformation message. In step 930, the UE may determine whether deletion of the stored RLF report content has been configured based on at least one of the above-described embodiments.

In step 935, when identifying that deletion of the RLF report content has been configured, the UE may delete the stored RLF report content. Deleting the RLF report content may mean deleting all information in RLF report variables.

In step 940, when not identifying that deletion of the RLF report content has been configured, the UE may maintain the stored RLF report content.

In step 945, when the split SRB or SRB3 has not been configured or fast MCG link recovery has not been configured, the UE may perform an RRC re-establishment operation and maintain the stored RLF report content.

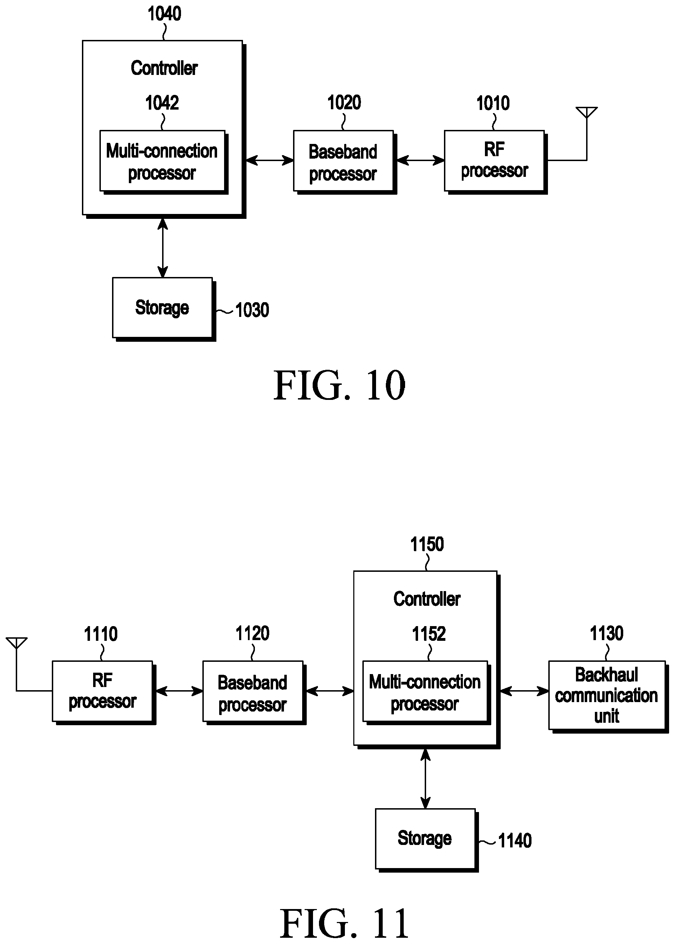

FIG. 10 is a block diagram illustrating the internal structure of a UE applied to an embodiment of the disclosure. The illustrated UE may be the UE 115 of FIGS. 1 and 2, the UE 415 of FIG. 4, the UE 505 of FIG. 5, the UE 605 of FIG. 6, or the UE 805 of FIG. 8.

Referring to FIG. 10, the UE may include a radio frequency (RF) processor 1010, a baseband processor 1020, a storage 1030, and a controller 1040.

The RF processor 1010 may perform functions for transmitting and receiving signals through a radio channel, such as band conversion and amplification of a signal. That is, the RF processor 1010 may upconvert a baseband signal provided by the baseband processor 1020 to an RF signal, transmit the RF signal through an antenna, and downconvert an RF signal received through the antenna. For example, the RF processor 1010 may include components such as a transmission filter, a reception filter, an amplifier, a mixer, an oscillator, a digital to analog converter (DAC), and an analog to digital convertor (ADC). Although only one antenna is shown here, the UE may be provided with multiple antennas.

In an embodiment, the RF processor 1010 may include a plurality of RF chains each including the above components. Furthermore, the RF processor 1010 may perform beamforming. For the beamforming, the RF processor 1010 may adjust the phase and size of each signal transmitted and received through multiple antennas or antenna elements. Further, the RF processor 1010 may perform a multiple input multiple output (MIMO) operation, and process several layers during the MIMO operation.

The baseband processor 1020 may perform a function of conversion between a baseband signal and a bit stream according to the physical layer specification of a system. For example, the baseband processor 1020 may generate complex symbols by encoding and modulating a transmission bit stream during data transmission. In addition, the baseband processor 1020 may restore a received bit stream by demodulating and decoding a baseband signal provided by the RF processor 1010 during data reception. For example, in the case of an OFDM scheme, when transmitting data, the baseband processor 1020 may generate complex symbols by encoding and modulating a transmission bit stream, map the complex symbols to subcarriers, and then configure OFDM symbols by performing inverse fast Fourier transform (IFFT) and cyclic prefix (CP) insertion.

In an embodiment, when receiving data, the baseband processor 1020 may divide a baseband signal provided by the RF processor 1010 into OFDM symbols, restore signals mapped to subcarriers by fast Fourier transform (FFT), and then restore a received bit stream through demodulation and decoding.

The baseband processor 1020 and the RF processor 1010 may transmit and receive signals as described above. Accordingly, at least one of the baseband processor 1020 or the RF processor 1010 may be referred to as a transmitter, a receiver, a transceiver, or a communication unit. Furthermore, at least one of the baseband processor 1020 or the RF processor 1010 may include multiple communication modules to support different radio access technologies.

In an embodiment, at least one of the baseband processor 1020 or the RF processor 1010 may include different communication modules to process signals in different frequency bands. For example, the different wireless connection techniques may include at least one of wireless local area network (WLAN) (e.g., IEEE 802.11) or a cellular network (e.g., LTE, NR, 5G, or 6G). In addition, the different frequency bands may include at least one of a super high frequency (SHF) (e.g. 3 to 30GHz) band, or a millimeter (mm) wave (e.g., 60GHz, 100GHz, or above) band.

The storage 1030 may store at least one data of a basic program, an application, or configuration information for the operation of the UE. In an embodiment, the storage 1030 may store information and data related to RLM, RLF detection, and RLF reporting according to at least one of the above-described embodiments. In addition, the storage 1030 may provide stored data, upon request of the controller 1040.

The controller 1040 may provide overall control to the UE. For example, the controller 1040 may transmit and receive signals through the baseband processor 1020 and the RF processor 1010. Further, the controller 1040 may record data in and read data from the storage 1040. To this end, the controller 1040 may include at least one processor. For example, the controller 1040 may include a communication processor (CP) for controlling the physical layer and a higher layer for communication and an application processor (AP) for controlling a higher layer (e.g., an application).

FIG. 11 is a block diagram illustrating the configuration of a BS according to an embodiment of the disclosure. The illustrated BS may be one of the BS 110 or 130 of FIG. 1, the BS 405 or 410 of FIG. 4, the BS 510 of FIG. 5, the BS 610 or 615 of FIG. 6, and the BS 810 or 815 of FIG. 8.

Referring to FIG. 11, the BS may include an RF processor 1110, a baseband processor 1120, a backhaul communication unit 1130, a storage 1140, and a controller 1150.

The RF processor 1110 may perform functions for transmitting and receiving signals through a radio channel, such as band conversion and amplification of the signal. That is, the RF processor 1110 may upconvert a baseband signal provided by the baseband processor 1020 to an RF band signal, transmit the RF band signal through an antenna, and downconvert an RF signal received through the antenna. For example, the RF processor 1110 may include components such as a transmission filter, a reception filter, an amplifier, a mixer, an oscillator, a DAC, and an ADC. Although only one antenna is shown here, the BS may be provided with multiple antennas.

In an embodiment, the RF processor 1110 may include a plurality of RF chains each including the above components. Furthermore, the RF processor 1110 may perform beamforming. For the beamforming, the RF processor 1010 may adjust the phase and size of each signal transmitted and received through multiple antennas or antenna elements. The RF processor 1110 may perform a MIMO operation, and process at least one layer to perform the MIMO operation.

The baseband processor 1220 may perform a function of conversion between a baseband signal and a bit stream according to the physical layer specification of the system. For example, the baseband processor 1120 may generate complex symbols by encoding and modulating a transmission bit stream during data transmission. In addition, the baseband processor 1120 may restore a received bit stream by demodulation and decoding a baseband signal provided by the RF processor 1110 during data reception. For example, in the case of an OFDM scheme, when transmitting data, the baseband processor 1120 may generate complex symbols by encoding and modulating a transmission bit stream, map the complex symbols to subcarriers, and then configure OFDM symbols by performing inverse fast Fourier transform (IFFT) and cyclic prefix (CP) insertion.

In an embodiment, when receiving data, the baseband processor 1120 may divide a baseband signal provided by the RF processor 1110 into OFDM symbols, restore signals mapped to subcarriers by FFT, and then restore a received bit stream through demodulation and decoding.

The baseband processor 1120 and the RF processor 1110 may transmit and receive signals as described above. Accordingly, at least one of the baseband processor 1120 or the RF processor 1110 may be referred to as a transmitter, a receiver, a transceiver, a communication unit, or a wireless communication unit.

The backhaul communication unit 1130 may provide an interface for communicating with other nodes in a network. That is, the backhaul communication unit 1130 may convert a bit stream transmitted to another node, for example, at least one of an MN, an SN, or a core network node to a physical signal, and convert a physical signal received from the other node to a bit stream.

The storage 1140 may store at least one data of a basic program, an application, or configuration information for the operation of the BS. In an embodiment, the storage 1140 may store at least one of information about a bearer allocated to a connected UE or a measurement result reported by the connected UE. In an embodiment, the storage 1140 may store information and data related to configuration and execution of RLM, RLF detection, and RLF reporting according to at least one of the above-described embodiments. The storage 1040 may provide stored data, upon request of the controller 1150.

The controller 1150 may provide overall control to the BS. For example, the controller 1150 may transmit and receive signals through the baseband processor 1120 and the RF processor 1110, or through the backhaul communication unit 1130. The controller 1040 may record data in and read data from the storage 1140. To this end, the controller 1150 may include at least one processor.

Methods according to the claims of the disclosure or the embodiments described in the specification may be implemented in hardware, software, or a combination of hardware and software.

When the methods are implemented in software, a computer-readable storage medium or computer program product storing at least one program (software module) may be provided. The at least one program stored in the computer-readable storage medium or computer program product is configured to be executable by at least one processor in an electronic device. The at least one program includes instructions that cause the electronic device to perform the methods according to the claims or the embodiments of the disclosure.

The program (software module or software) may be stored in random access memory (RAM), non-volatile memory including flash memory, ROM, electrically erasable programmable ROM (EEPROM), a magnetic disc storage device, a compact disc-ROM (CD-ROM), digital versatile disc (DVD), any other type of optical storage device, or a magnetic cassette. Alternatively, the program may be stored in memory configured as a combination of some or all of them. In addition, each constituent memory may be plural in number.

Further, the program may be stored in an attachable storage device accessible through a communication network such as the Internet, an intranet, a local area network (LAN), a wide LAN (WLAN), or a storage area network (SAN), or a combination thereof. Such a storage device may be connected to a device implementing an embodiment of the disclosure through an external port. Further, a separate storage device on the communication network may be connected to the device implementing the embodiment of the disclosure.

In the specific embodiments of the disclosure described above, elements included in the disclosure are expressed in singular or plural forms according to the specific embodiments. However, the singular or plural expression is appropriately selected in the context for convenience of description, and the disclosure is not limited to the singular or plural components. Even if a component is expressed as plural, it may be singular. Even a component expressed as singular may be plural in number.

The embodiments of the disclosure disclosed in the specification and drawings are merely presented as specific examples to easily explain the technical ideas of the disclosure and help the understanding of the disclosure, and are not intended to limit the scope of the disclosure. That is, it is apparent to those skilled in the art that other modifications can be made based on the technical spirit of the disclosure. In addition, the above embodiments may be operated in combination as needed. For example, a BS and a UE may be operated in a combination of parts of different embodiments of the disclosure. Further, the embodiments of the disclosure are applicable to other communication systems, and other modifications are also possible based on the technical spirit of the embodiments. For example, the embodiments are also applicable to the LTE system and the 5G or NR system.

## Claims

1. A method of managing a link by a user equipment (UE) in wireless communication, the method comprising:
upon detection of master cell group (MCG) failure related to dual connectivity, collecting radio link failure (RLF) report content for RLF reporting;
transmitting an MCG failure information message related to the MCG failure to a first base station (BS) related to the dual connectivity;
based on a response message related to the MCG failure being not received within a specific time after the transmission of the MCG failure information message, adding an indicator indicating that fast MCG link recovery is not successfully completed to the stored RLF report content; and
transmitting an RLF report including the stored RLF report content to a second BS during a radio link re-establishment procedure with the second BS after the MCG failure.

2. The method of claim 1, further comprising deleting the collected RLF report content, based on the response message related to the MCG failure being received within the specific time after the transmission of the MCG failure information message.

3. The method of claim 2, wherein the response message includes an indicator instructing deletion of the stored RLF report content, based on at least one predetermined condition being satisfied.

4. The method of claim 2, further comprising receiving a reconfiguration message including configuration information for the fast MCG link recovery from a master node BS related to the dual connectivity;
wherein the configuration information includes an indicator instructing deletion of the stored RLF report content, based on at least one predetermined condition being satisfied.

5. The method of claim 3 or 4, wherein the at least one condition includes at least one of:
stopping a timer indicating a time until reception of the response message related to the MCG failure after the transmission of the MCG failure information message;
receiving the response message related to the MCG failure after the transmission of the MCG failure information message; or
receiving an acknowledgment (ACK) for the transmission of the MCG failure information message.

6. An apparatus in a user equipment (UE) for performing link management in wireless communication, the apparatus comprising:
a communication unit and a controller,
wherein the controller is configured to:
upon detection of master cell group (MCG) failure related to dual connectivity, collect and store radio link failure (RLF) report content for RLF reporting;
transmit an MCG failure information message related to the MCG failure to a first base station (BS) related to the dual connectivity through the communication unit;
based on a response message related to the MCG failure being not received within a specific time after the transmission of the MCG failure information message, add an indicator indicating that fast MCG link recovery is not successfully completed to the stored RLF report content; and
transmit an RLF report including the stored RLF report content to a second BS related to a radio link re-establishment procedure through the communication unit during the radio link reestablishment procedure after the MCG failure.

7. The apparatus of claim 6, wherein the controller is configured to delete the stored RLF report content, based on the response message related to the MCG failure being received within the specific time after the transmission of the MCG failure information message.

8. The apparatus of claim 7, wherein the response message includes an indicator instructing deletion of the stored RLF report content, based on at least one predetermined condition being satisfied.

9. The apparatus of claim 7, wherein the controller is configured to receive a reconfiguration message including configuration information for the fast MCG link recovery from a master node BS related to the dual connectivity through the communication unit; and
wherein the configuration information includes an indicator instructing deletion of the stored RLF report content, based on at least one predetermined condition being satisfied.

10. The apparatus of claim 8 or 9, wherein the at least one condition includes at least one of:
stopping a timer indicating a time until reception of the response message related to the MCG failure after the transmission of the MCG failure information message;
receiving the response message related to the MCG failure after the transmission of the MCG failure information message; or
receiving an acknowledgment (ACK) for the transmission of the MCG failure information message.

11. A method of performing link management for a user equipment (UE) by a base station (BS) in wireless communication, the method comprising:
receiving, from the UE, a master cell group (MCG) failure information message related to MCG failure related to dual connectivity of the UE;
performing a radio link re-establishment procedure with the UE after the reception of the MCG failure information message; and
based on a notification indicator indicating that radio link failure (RLF) report content for RLF reporting is stored being received from the UE during the radio link re-establishment procedure, receiving, from the UE, an RLF report including an indicator indicating that fast MCG link recovery is not successfully completed after the radio link re-establishment procedure.

12. The method of claim 11, comprising transmitting a response message related to the MCG failure to the UE after the reception of the MCG failure information message,
wherein the response message includes a deletion indicator instructing whether to delete the RLF report content for the RLF reporting stored by the UE, and
wherein based on the deletion indicator not instructing deletion of the RLF report content, the notification indicator is received from the UE.

13. An apparatus in a base station (BS) for performing link management for a user equipment (UE) in wireless communication, the apparatus comprising:
a communication unit and a controller,
wherein the controller is configured to:
receive a master cell group (MCG) failure information message related to MCG failure related to dual connectivity of the UE from the UE through the communication unit;
perform a radio link re-establishment procedure with the UE after the reception of the MCG failure information message; and
based on a notification indicator indicating that radio link failure (RLF) report content for RLF reporting is stored being received from the UE during the radio link re-establishment procedure, receive an RLF report including an indicator indicating that fast MCG link recovery is not successfully completed from the UE through the communication unit after the radio link reestablishment procedure.

14. The apparatus of claim 13, wherein the controller is configured to transmit a response message related to the MCG failure to the UE through the communication unit after the reception of the MCG failure information message;
wherein the response message includes a deletion indicator instructing whether to delete the RLF report content for the RLF reporting stored by the UE; and
wherein based on the deletion indicator not instructing deletion of the RLF report content, the notification indicator is received from the UE.
